# EUROPEAN PATENT SPECIFICATION

(11) **EP 1 378 405 B1**
(45) Date of publication and mention of the grant of the patent: **17.05.2006**
(21) Application number: 03077177.8
(22) Date of filing: 07.07.2003
(51) Int. Cl.: B60R 22/18, B62D 25/08

(54) **Method for the provision later on of fastening means for fastening a safety belt**
Verfahren zur nachträglichen Montage von Befestigungsmittel für einen Sicherheitsgurt
Méthode de montage par après de moyens de fixation pour une ceinture de sécurité

(30) Priority: 05.07.2002 NL 1021017; 17.10.2002 NL 1021672
(43) Date of publication of application: 07.01.2004
(73) Proprietor: Carrosseriefabriek Tijmen Ploeg BV, 3812 RE Amersfoort (NL)
(72) Inventor: Ploeg, Marinus, 3828 BC Hoogland (NL)
(74) Representative: Kupecz, Arpad

(56) References cited:
- DE-A- 4 026 939
- DE-A- 19 744 664

## Description

The present invention relates to a method for the provision afterward of attachment means for attaching a safety belt in a vehicle having a loading space, in which the number of seats needs to be increased.

There are vehicles available on the market, in particular delivery vans, that have a loading space. It is known to increase the number of seats in the delivery van by providing extra seats. These are attached to a frame mounted on the floor. The frame is provided with points at which a safety belt can be attached. In the event of a collision this frame has to be able to resist considerable forces. In the Netherlands, the relevant requirements for safety are described in the Netherlands Transport Regulations.

The drawback of the known method is that it involves an undesirable occupation of space.

The closest prior art having the measures of the claim 1 is DE-A- 40 26 939. This DE 40 26 939 A discloses a method for the provision afterward of attachment means for attaching a safety belt in a vehicle having a loading space, in which the number of seats needs to be increased.

It is the object of the invention to provide a method of the kind mentioned in the preamble by which it is possible to effectively provide the attachment means and to limit the occupation of space in the vehicle.

To this end the method of the invention is defined by the features of claim 1.

Practically every delivery van has side struts. When these are used to withstand the forces that may occur, it is not possible to guarantee that these will indeed be withstood in accordance with the regulations that are in force. In accordance with the invention, however, reinforcement means are present, which absorb the forces and transmit them to a larger part of the body, or will do so in the event of the side struts collapsing in a collision. The reinforcement means may be, for example, a cable. This may be pre-stressed. In case a supporting arm (for supporting a seating part of a seat) is used, this may be integrally formed with the reinforcement means and take the form of, for example, a tube. The front end of the tube will be in contact with the attachment means, and the rear end of the tube is then connected with the first element as defined above. The tube will be supported by a large part of the body. Thanks to the invention it is also possible to avoid damaging the floor plate, especially a relatively central part of the floor plate of the car's loading space, when mounting the attachment means. Moreover, the difficulties arising when mounting on the floor plate are avoided. Now the forces can be withstood more effectively. Taking into account the available space in the vehicle, the reinforcement means will in practice extent substantially horizontally. There are two first positions, seeing that reinforcement means are provided on both the left- and the right-hand side of the vehicle and each is connected with the vehicle.

The reinforcement means are preferably connected with the first element via an auxiliary plate.

In this way the reinforcement means can be fastened (indirectly) to the body in a simple manner and the forces can be transmitted and distributed effectively.

The attachment means are preferably supported by the reinforcement means by way of a supporting arm.

This makes it possible to standardise the attachment of the attachment means, while the element comprising the reinforcement means that is to be mounted more to the rear of the vehicle can be adjusted to the respective dimensions of the vehicle.

Suitably, the attachment means are connected with the two first elements at some height above the floor, being at most 30 cm above the height of the attachment means, and preferably being the same height.

In a collision, the forces exerted can thus be effectively transmitted via the attachment means and the reinforcement means to the body.

According to a favourable embodiment, prior to mounting the attachment means, the side strut or the supporting arm connected with the side strut is provided with a fastening element having a male or female portion that can engage a complementary end of the attachment means.

This makes it possible to use the same attachment means for different types of delivery vans. If the attachment means are formed by a tube provided with fixing points for a safety belt, the tube may be a tube that is adjustable in length, thereby providing a universal solution for a variety of delivery vans. Instead of that, it is obviously also possible to use a (limited) number of non-adjustable tubes of a standard length. This contributes to an economical application of the method.

The attachment means are preferably mounted so as to be detachable.

The invention thus affords the considerable advantage that the delivery van can be provided with extra seats and that they can be removed again. In the removed condition there is practically no loss of loading space. After removal, the loading floor (the substantially central portion thereof) is not damaged.

The reinforcement means are preferably detachably connected with the fastening element.

In this way the user of the vehicle can remove the fastening element more easily so as to temporarily enlarge the available loading space. In this way the floor is not damaged and has no unnecessary unevennesses.

Although optional seats, in this case, their seating parts, may be mounted in the vehicle separate from the attachment means, for example, loose or connected with the floor, the attachment means are according to a preferred embodiment provided with a frame portion comprising a seating part. According to an alternative embodiment, the seating part is fastened to an optionally present supporting arm.

Compared to a fixed frame connected with the floor as known from the prior art, is all the space under the seat available space. Loose chairs, which will generally not be preferred, are avoided.

The seating part is preferably pivotable about a horizontal axis defined by the attachment means.

This allows the seating part to be folded up (or possibly folded down) and, in contrast with the use of the known frame, is the entire space in front of the folded away seat available without obstruction.

Finally, a preferred embodiment is characterised in that a substantially vertically oriented member is fastened to a constituent of the group comprised of i) the supporting arm and ii) the attachment means, between the supporting arms in order to provide a fixing point for a three-point belt.

This is an effective manner for providing a third fixing point for attaching a three-point belt.

The present invention will now be elucidated by way of an exemplary embodiment and with reference to the drawing in which:
Fig. 1 is a cut-away side view of a vehicle provided with a fastening element according to the invention;
Fig. 2 is a schematic partial cross section (top view) through the vehicle of Fig. 1.

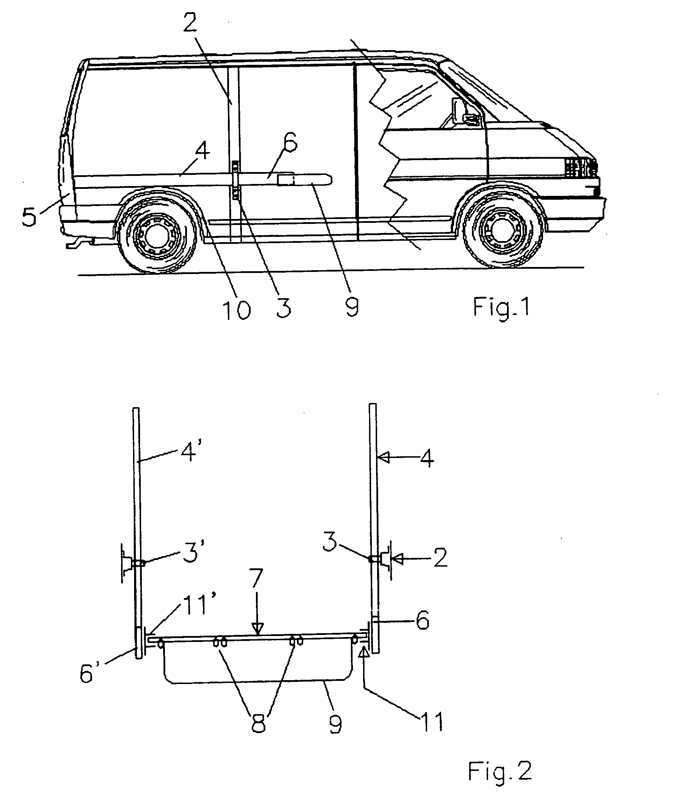

In Fig. 1 a partially cut-away delivery van 1 is depicted, showing the front side at the right and a cut-away loading space at the left. The delivery van 1 has a side strut 2, which in the embodiment shown is provided with a brace 3. This brace 3 is welded to the side strut 2, but it is of course also possible to use bolts. The brace 3 is firmly connected with a reinforcement tube 4, which in turn is firmly connected with rear strut 5. The principle manner of connecting according to the invention, is via the wheel housing 10. This embodiment therefore describes the use of three fixing points (at each side of the vehicle 1 one first element, and two second elements).

For the best possible absorption of forces in the event of a collision, the angle between the horizontal and the reinforcement tube 4 is, for example, -5° - 15° (in the direction of movement, i.e. from left to right).

The reinforcement tube 4 comprises an arm 6 receiving one end of a attachment means 7. In the embodiment shown here, the attachment means 7 is a cylindrical tube. The ends of the attachment means 7 are preferably cylindrical, while the portion of the attachment means 7 between the ends has a rectangular, e.g. square cross section. In a manner known as such, the attachment means 7 is provided with fixing points 8 (see Fig. 2) where a safety belt (not shown) can be attached. According to a favourable embodiment, the attachment means 7 can be attached at several points over the length of the arm 6. This may be realised, for example, by means of screws. In this way the legroom available for a passenger can be adjusted.

In the embodiment illustrated, the tubular attachment means 7 is provided with a seating part 9. As can be seen (Fig. 1), the space under the seating part is completely free.

Fig. 2 shows a partial cross-sectional top view of the delivery van 1. The ends of the tubular attachment means 7 are here shown to be received in the attachment means 11, 11'. On the attachment means 7 there are also 6 fixing points 8 for three two-point hip-belts (not shown). The attachment means 7 is also provided with a seating part 9, here in the form of a bench. From the fastening elements 11, 11' tubular reinforcement means 4, 4' extend to a part of the delivery van 1 that is located (viewed in the longitudinal direction of the vehicle), behind the attachment means 7 (i.e. more to the left in Fig. 1), where they are connected with the delivery van 1 (see Fig. 1). The fastening elements 11, 11' shown in the embodiment are designed to provide a good height of a seat.

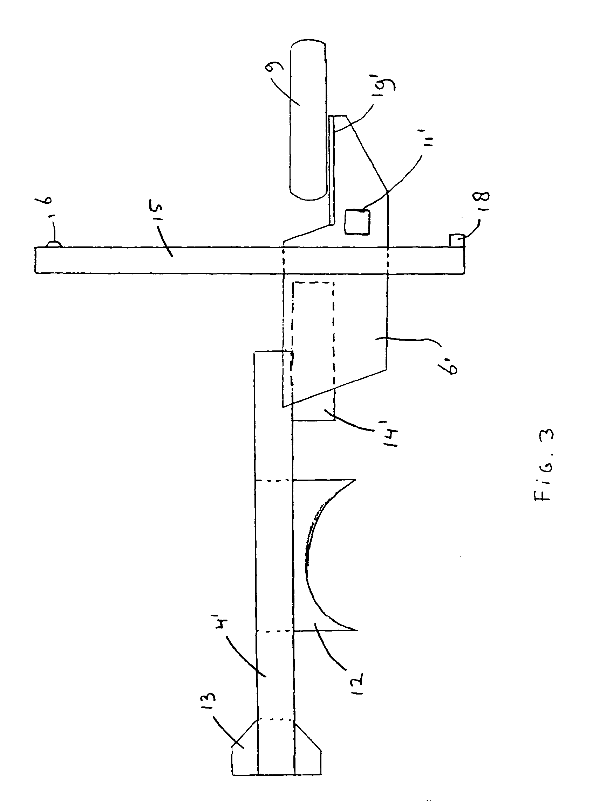

Fig. 3 shows the device as mounted in the vehicle using the method according to the invention, without the vehicle 1. For extra strength, the reinforcement tube 4 is provided with an auxiliary plate 12, which in turn will be mounted to plating near the wheel housing 10. For an optimal strength, the auxiliary plate 12 is mounted very close to the wheel housing, for example, at a distance of less than 5 cm. In practice such a wheel housing 10 supports other parts, such as a shock absorber, the wheel suspension and the like, and is well able to withstand considerable forces. This is realised, preferably by providing rivets (monobolt). Rivets are capable of bearing a load of no less than 900 kg each, and are therefore well able to transmit the considerable forces occurring in the event of a collision, without giving way. Similarly, a second fastening of the reinforcement tube 4 may be provided using a second auxiliary plate 13, making an indirect connection with the rear strut 5 possible.

The embodiment of the supporting arm 6 illustrated in Fig. 3, takes the form of a plate, which is connected with the reinforcement tube 4' (here via an auxiliary tube 14'). For attaching a three-point belt, a tube 15 is provided extending in the upward direction with at its upper end a fixing point 16 for a (third) point of a three-point belt (not shown). The tube 15 may be curved or bent, and the angle with the vertical will general be less than 20°.

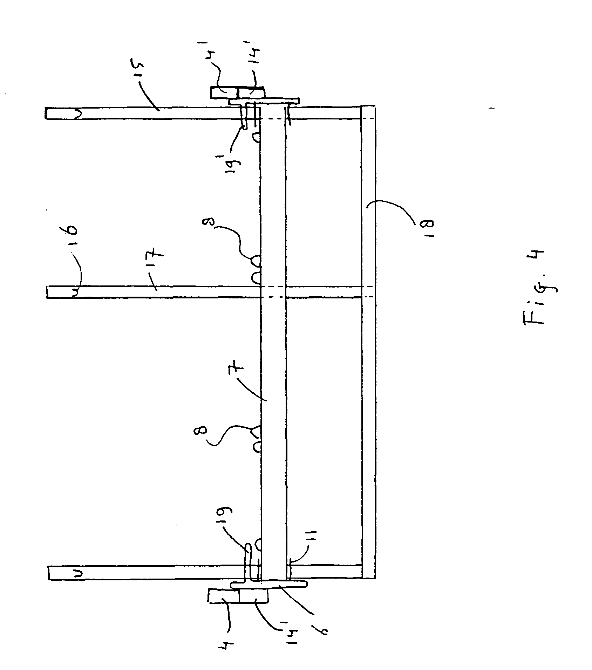

Fig. 4 shows a front view of the construction depicted in Fig. 3, without the seating part 9. In addition to the components already described, a third tube 17 can be seen extending upward, which is attached to the attachment means 7 and, for extra firmness, to a support beam 18 which in turn is connected via the tubes 15, 15' with the supporting arms 6, 6'. In the embodiment shown here, the plate-like supporting arms 6, 6' possess support elements 19, 19', on which the seating part 9 can be mounted.

The various parts will usually be made of steel. Typical dimensions for the plate-like supporting arm 6 are a thickness of 3 mm, for an auxiliary plate 2 mm, and the reinforcement tube has, for example, a width of 30 mm, a height of 100 mm and a wall thickness of 3 mm.

To the person skilled in the art it is obvious that the sequence in which the components are mounted is not really critical, and impractical methods are obvious even with a limited amount of common sense. It will also be obvious to the person skilled in the art that the method according to the invention may be varied within the scope of the appended claims. For example, the attachment means 7 may be provided with a backrest and second attachment means supported by the side struts may also be provided, in particular higher up than the first attachment means. These second attachment means may advantageously be used for 3-point belts, with the shoulder point being connected with the second attachment means. For each side of the vehicle applies that one point of the two- or three-point belt may be provided on the supporting arm 6 instead of on the attachment means 7.

To the person skilled in the art it is obvious that identical parts are indicated with identical reference numbers, and that accents indicate the same part at the other (left- or right-hand) side of the vehicle.

## Claims

1. A method for the provision afterward of attachment means for attaching a safety belt in a vehicle having a loading space, in which the number of seats needs to be increased, wherein the vehicle (1) possesses side struts (2, 2'), a wheel housing (10) of a rear wheel of the vehicle (1), a rear strut (5), and plating provided between the side struts (2, 2') and the rear strut (5), wherein reinforcement means (4, 4') are connected with at least two first elements chosen from the group of i) the wheel housing (10), and ii) a plating area located at less than 40 cm from the wheel housing (10), and wherein the attachment means (7) are mounted such that they are supported by said reinforcement means (4, 4'), **characterised in that** said reinforcement means (4, 4') are connected with at least two second elements chosen from i) the side struts (2, 2'), ii) the rear strut (5) and iii) a floor portion of the vehicle located behind the side struts (2, 2').

2. A method according to claim 1, **characterised in that** the reinforcement means (4, 4') are connected with the first element via an auxiliary plate (12).

3. A method according to claim 2, **characterised in that** the attachment means (7) are supported by the reinforcement means (4, 4') by way of a supporting arm (6, 6').

4. A method according to claim 3, **characterised in that** the reinforcement means (4, 4') are connected with the two first elements at some height above the floor of the vehicle, being at most 30 cm above the height of the attachment means (7), and preferably being the same height.

5. A method according to one of the preceding claims, **characterised in that** prior to mounting the attachment means (7), the reinforcement means (4, 4') or the supporting arm (6, 6') connected with the side strut is provided with a fastening element (11, 11') having a male or female portion that can engage a complementary end of the attachment means (7).

6. A method according to claim 5, **characterised in that** the attachment means (7) are mounted so as to be detachable

7. A method according to one of the preceding claims, **characterised in that** the attachment means (7) are provided with a frame portion comprising a seating part (9).

8. A method according to claim 7, **characterised in that** said seating part (9) is pivotable about a horizontal axis defined by the attachment means (7).

9. A method according to one of the claims 3 to 8, **characterised in that** a substantially vertically oriented member is fastened to a constituent of the group comprised of i) the supporting arm (6, 6') and ii) the attachment means (7), between the supporting arms (6, 6') in order to provide a fixing point (16) for a three-point belt.

## Patentansprüche

1. Verfahren zur nachträglichen Montage von Befestigungsmittel zum Anbringen eines Sicherheitsgurtes in einem Fahrzeug mit einem Laderaum, in welchem die Anzahl der Sitze zu vergrößern ist, worin das Fahrzeug (1) seitliche Streben (2,2') besitzt, einen Radkasten (10) eines Hinterrades des Fahrzeuges (1), eine rückwärtige Strebe (5) und eine Platte, welche zwischen den seitlichen Streben (2,2') und der rückwärtigen Strebe (5) vorhanden ist, worin Aussteifungsmittel (4,4') zumindest mit zwei ersten Elementen verbunden sind, welche ausgewählt sind aus der Gruppe, i) dem Radkasten (10), und ii) einem Platten-Bereich, der weniger als 40 cm von dem Radkasten (10) entfernt platziert ist, und worin Befestigungsmittel (7) derart angebracht sind, dass sie mittels der Aussteifungsmittel (4,4') gestützt werden, **dadurch gekennzeichnet, dass** die Aussteifungsmittel (4,4') mit zumindest zwei zweiten Elementen verbunden sind, welche ausgewählt sind aus i) den seitlichen Streben (2,2'), ii) der rückwärtigen Strebe (5) und iii) einem Bodenteil des Fahrzeuges, welches hinter dem seitlichen Streben (2,2') positioniert ist.

2. Verfahren nach Anspruch 1, **dadurch gekennzeichnet, dass** die Aussteifungsmittel (4,4') mit dem ersten Element über eine zusätzliche Platte (12) verbunden sind.

3. Verfahren nach Anspruch 2, **dadurch gekennzeichnet, dass** die Befestigungsmittel (7) durch die Aussteifungsmittel (4,4') mittels eines Stützarmes (6,6') getragen werden.

4. Verfahren nach Anspruch 3, **dadurch gekennzeichnet, dass** die Aussteifungsmittel (4,4') mit den beiden ersten Elementen in einer bestimmten Höhe oberhalb des Bodens des Fahrzeuges verbunden sind, höchstens 30 cm über dem Niveau der Befestigungsmittel (7), und vorzugsweise auf der gleichen Höhe.

5. Verfahren nach einem der vorhergehenden Ansprüche, **dadurch gekennzeichnet, dass** vor der Anbringung der Befestigungsmittel (7) die Aussteifungsmittel (4,4') oder der Stützarm (6,6'), welcher mit der seitlichen Strebe verbunden ist, ausgestattet wird mit einem Verbindungselement (11,11') mit einem hervorstehenden Teil oder einem Hohlteil, welches in ein komplementäres Ende der Befestigungsmittel (7) eingreifen kann.

6. Verfahren nach Anspruch 5, **dadurch gekennzeichnet, dass** die Befestigungsmittel (7) abnehmbar angebracht sind.

7. Verfahren nach einem der vorhergehenden Ansprüche, **dadurch gekennzeichnet, dass** die Befestigungsmittel (7) ein Rahmenteil aufweisen, welches ein Sitzelement (9) umfasst.

8. Verfahren nach Anspruch 7, **dadurch gekennzeichnet, dass** das Sitzelement (9) um eine horizontale Achse, welche durch die Befestigungsmittel (7) bestimmt wird, drehbar ist.

9. Verfahren nach einem der Ansprüche 3 bis 8, **dadurch gekennzeichnet, dass** ein im Wesentlichen vertikal ausgerichtetes Element an einem Bestandteil der Gruppe aus, i) dem Stützarm (6,6') und ii) der Befestigungsmittel (7) angebracht ist, zwischen den Stützarmen (6,6'), um einen Befestigungspunkt (16) für einen Drei-Punkt-Gurt bereit zu stellen.

## Revendications

1. Procédé d'intégration après fabrication de moyens de fixation destinés à fixer une ceinture de sécurité sur un véhicule comportant un espace de chargement, dans lequel le nombre de sièges doit être augmenté, dans lequel le véhicule (1) comporte des montants latéraux (2, 2'), un passage de roue (10) d'une roue arrière du véhicule (1), un montant arrière (5), et un doublage agencé entre les montants latéraux (2, 2') et le montant arrière (5), dans lequel des moyens de renforcement (4, 4') sont reliés à au moins deux premiers éléments sélectionnés à partir du groupe i) du passage de roue (10), et ii) d'une zone de doublage située à moins de 40 cm du passage de roue (10), et dans lequel les moyens d'attache (7) sont montés de telle sorte qu'ils sont supportés par lesdits moyens de renforcement (4, 4'), **caractérisé en ce que** :
lesdits moyens de renforcement (4, 4') sont reliés à au moins deux seconds éléments sélectionnés à partir i) des montants latéraux (2, 2'), ii) du montant arrière (5) et iii) d'une partie de plancher du véhicule située derrière les montants latéraux (2, 2').

2. Procédé selon la revendication 1, **caractérisé en ce que** les moyens de renforcement (4, 4') sont reliés au premier élément, par l'intermédiaire d'une plaque auxiliaire (12).

3. Procédé selon la revendication 2, **caractérisé en ce que** les moyens d'attache (7) sont supportés par les moyens de renforcement (4, 4') au moyen d'un bras de support (6, 6').

4. Procédé selon la revendication 3, **caractérisé en ce que** les moyens de renforcement (4, 4') sont reliés aux deux premiers éléments, à une certaine hauteur au-dessus du plancher du véhicule, qui est au plus à 30 cm au-dessus de la hauteur des moyens d'attache (7), et, de préférence, qui est à la même hauteur.

5. Procédé selon l'une des revendications précédentes, **caractérisé en ce que**, avant de monter les moyens d'attache (7), les moyens de renforcement (4, 4') ou le bras de support (6, 6') reliés au montant latéral sont équipés d'un élément de liaison (11, 11') comportant une partie mâle ou femelle qui peut être couplée à une extrémité complémentaire des moyens d'attache (7).

6. Procédé selon la revendication 5, **caractérisé en ce que** les moyens d'attache (7) sont montés de manière à être démontables.

7. Procédé selon l'une des revendications précédentes, **caractérisé en ce que** les moyens d'attache (7) comportent une partie de châssis comprenant une partie formant appui (9).

8. Procédé selon la revendication 7, **caractérisé en ce que** ladite partie formant appui (9) peut pivoter autour d'un axe horizontal défini par les moyens d'attache (7).

9. Procédé selon l'une des revendications 3 à 8, **caractérisé en ce qu'**un élément orienté sensiblement verticalement est fixé sur un composant du groupe constitué par i) le bras de support (6, 6') et ii) les moyens d'attache (7), entre les bras de support (6, 6') afin de former un point d'attache (16) pour une ceinture en trois point.
